# EUROPÄISCHE PATENTSCHRIFT

(11) **EP 1 772 348 B1**
(45) Veröffentlichungstag und Bekanntmachung des Hinweises auf die Patenterteilung: **23.04.2008**
(21) Anmeldenummer: 06018629.3
(22) Anmeldetag: 06.09.2006
(51) Int. Cl.: B62D 5/04, B62D 7/02

(54) **Antriebs- und Lenkvorrichtung für ein Flurförderzeug**
Drive and steering device for industrial truck
Dispositif d'entraînement et de direction pour chariot de manutention

(30) Priorität: 06.10.2005 DE 102005047958
(43) Veröffentlichungstag der Anmeldung: 11.04.2007
(73) Patentinhaber: Jungheinrich Aktiengesellschaft, 22047 Hamburg (DE)
(72) Erfinder: Prehn, Volkmar, Dipl.-Ing., 24558 Henstedt-Ulzburg (DE)
(74) Vertreter: Hauck Patent- und Rechtsanwälte

(56) Entgegenhaltungen:
- EP-A1- 0 490 673
- DE-A1- 3 539 107

## Beschreibung

Die Erfindung bezieht sich auf eine Antriebs- und Lenkvorrichtung für ein Flurförderzeug nach dem Oberbegriff des Patentanspruches 1.

Deichselgelenkte Flurförderzeuge sind z.B. derart ausgelegt, daß ein einziges Antriebsrad in einem Schemel um eine horizontale Achse gelagert ist und der Schemel seinerseits um eine vertikale Achse im Rahmen des Flurförderzeugs schwenkbar aufgehängt ist. Der Schemel trägt auch einen Antriebsmotor für das gelenkte Rad, der über ein Getriebe mit dem Antriebsrad in Wirkverbindung steht. Durch Verschwenken der Deichsel findet mithin eine Winkelverstellung des Antriebsrades und damit ein Lenkvorgang statt. Die Steuerung des Antriebsmotors erfolgt üblicherweise über Bedienelemente am Kopf der Deichsel. Es versteht sich, daß auch ein anderer Lenker für die Lenkbetätigung des gelenkten Rades vorgesehen werden kann.

Es ist auch bekannt, für die Lenkung einen Servoantrieb vorzusehen. Hierzu wird ein Lenkmotor verwendet, der rahmenfest angebracht ist und z. B. über eine Kette auf ein konzentrisch zum Antriebsmotor angeordnetes Zahnrad wirkt, um den Schemel bzw. die Antriebseinheit zu verschwenken. Es ist auch bekannt, eine Deichsel ohne mechanische Verbindung zum gelenkten Rad an einer anderen Stelle des Fahrzeugrahmens um eine vertikale Achse schwenkbar gelagert anzubringen. Der Lenkwinkel wird von einem Sensor aufgenommen, der bei einer Schwenkbewegung der Deichsel verstellt wird. Dieses Signal wird als Sollwert auf eine Regelvorrichtung gegeben. Ein zweiter Sensor ermittelt den Lenkwinkel des gelenkten Rades und gibt dieses Signal als Istwert auf die Regelvorrichtung. Mit Hilfe eines geeigneten Algorithmus werden in der Regelvorrichtung Istwert und Sollwert verglichen und ein Strom für den Servoantrieb bereitgestellt, so daß der Istwert dem Sollwert angenähert wird. Sind die Werte gleich, wird der Servoantrieb abgeschaltet.

Der Erfindung liegt die Aufgabe zugrunde, eine kompakte Antriebs- und Lenkvorrichtung für deichselgeführte Flurförderzeuge zu schaffen, die besonders wenig aufwendig ausgeführt ist. Außerdem soll sie so beschaffen sein, daß sie ohne weiteres herkömmliche Antriebseinheiten ersetzen kann.

Diese Aufgabe wird durch die Merkmale des Patentanspruchs 1 gelöst.

Bei der erfindungsgemäßen Vorrichtung ist der Lenker, z.B. eine Deichsel mittels eines vorzugsweise ringförmigen Lagerbauteils koaxial oder achsparallel zur Antriebseinheit drehbar gelagert. Vorzugsweise ist ein ringförmiges Lagerbauteil in einem rahmenfesten Lagerring gelagert. Es ist auch denkbar, das Lagerbauteil an der Antriebseinheit zu lagern. Die Antriebseinheit ist naturgemäß ihrerseits drehbar im Rahmen gelagert. Bei der erfindungsgemäßen Vorrichtung ist diese drehbare Lagerung ohne Anschläge. Ein Winkelsensor ist am Lagerbauteil angebracht und wird mithin bei Verschwenkung des Lenkers um die vertikale Achse mitbewegt. Er mißt den relativen Winkel zur Antriebseinheit. Wird mit Hilfe des Lenkers, z.B. einer Deichsel ein Lenkvorgang eingeleitet, erfolgt zunächst eine Relativbewegung zwischen dem Lenker mit dem Winkelsensor und der Antriebseinheit. Dieser Winkel führt zur Aktivierung des Lenkmotors, und die Antriebseinheit wird so lange verschwenkt, bis der Winkel, der vorübergehend zwischen Lenker und Antriebseinheit erzeugt worden ist, wieder zu Null wird. Mit anderen Worten, es liegt eine Positionsregelung auf einen Differenzwinkel Null vor.

Bei der erfindungsgemäßen Vorrichtung können Lenker und Antriebseinheit konzentrisch zueinander gelagert sein. Dadurch wird eine kompakte wenig aufwendige Vormontageeinheit erreicht, die z. B. auch herkömmliche Antriebseinheiten Schnittstellen kompatibel ohne elektrische Lenkung ersetzen kann. Bei der erfindungsgemäßen Vorrichtung wird nur ein einziger Sensor benötigt. Der Sensor ist gleichzeitig Geber und Drehwinkelmeßvorrichtung.

Es sind verschiedene konstruktive Möglichkeiten denkbar, Sensor und Antriebseinheit zusammenwirken zu lassen. Eine Ausgestaltung der Erfindung sieht hierzu vor, daß die Antriebseinheit einen konzentrischen Zahnkranz aufweist und der Sensor ein Ritzel hat, das mit dem Zahnkranz in Eingriff steht. Nach einer weiteren Ausgestaltung der Erfindung wird der Sensor mit dem Ritzel mittels einer Feder in Richtung Zahnkranz vorgespannt, um einen Toleranzausgleich zu bewerkstelligen und einen spielfreien Zahneingriff. Es versteht sich, daß der Zahnkranz nicht geschlossen sein muß, vielmehr reicht ein Zahnsegment aus, dessen Radius durch die Drehachse der Antriebseinheit geht.

Falls die elektrische Versorgung der Lenkunterstützung ausfällt, sieht eine weitere Ausgestaltung der Erfindung vor, daß an der Antriebseinheit im Winkelabstand zu beiden Seiten der Nullstellung der Deichsel Anschläge vorgesehen sind, gegen welche die Deichsel bzw. das Lagerbauteil anschlägt, wenn die Deichsel um den Winkelabstand gegenüber der Antriebseinheit verschwenkt wird. Auf diese Weise ist - wenn auch mit Schleppfehler - eine Notlenkfähigkeit erreicht. Der Differenzwinkel zwischen der Nullstellung der Deichsel und den Anschlägen liegt z. B. bei 20°.

Als Drehwinkelsensor kann z. B. ein berührungsloser magnetischer Drehwinkelsensor vorgesehen werden, der getrennte Analogsignale für den Sinus- und Cosinus-Anteil des gemessenen Winkels erzeugt. Ein derartiger Sensor ist z. B. aus EP 1 503 182 A1 bekannt geworden. Aus EP 1 508 783 A1 ist auch bekannt geworden, den Sinus- und Cosinus-Anteil eines Drehwinkelsensors zur Berechnung des Drehwinkels zu verwenden und zugleich eine Temperaturkorrektur vorzunehmen. Indem in einer Auswerteeinheit ideale Werte der Ausgangssignale abgelegt werden, die sich aus der geometrischen Beziehung der Sensoren ergeben und die gemessenen Ausgangssignale mit den idealen Werten verglichen werden, kann ein Warn- oder Stoppsignal erzeugt werden, wenn der Unterschied zwischen gemessenem und idealem Wert einen vorgegebenen Betrag erreicht. Auf diese Weise ist möglich, Fehlfunktionen des Sensors wirksam zu überwachen.

Weiterhin ist eine Antriebs- und Lenkvorrichtung nach dem Oberbegriff des Anspruchs 1 aus EP 0 490 673 A1 bekannt.

Die Erfindung wird nachfolgend anhand von Zeichnungen näher erläutert:
- Fig. 1: zeigt die Seitenansicht einer Antriebs- und Lenkvorrichtung nach der Erfindung,
- Fig. 2: zeigt die um 90° gegenüber Fig. 1 verdrehte Seitenansicht der erfindungsgemäßen Vorrichtung,

- Fig. 3: zeigt die Rückansicht der Vorrichtung nach Fig. 1.
- Fig. 4: zeigt die Druntersicht unter die Vorrichtung nach Fig. 1 in Richtung der Pfeile 4.
- Fig. 5: zeigt die Draufsicht auf die Vorrichtung nach Fig. 1 in Richtung Pfeil 5.
- Fig. 6: zeigt einen Teilschnitt durch die Vorrichtung nach Fig. 5 entlang der Linie 6-6.
- Fig. 7: zeigt äußerst schematisch die Lenkregelung der in den Fig. 1 bis 5 gezeigten Vorrichtung.

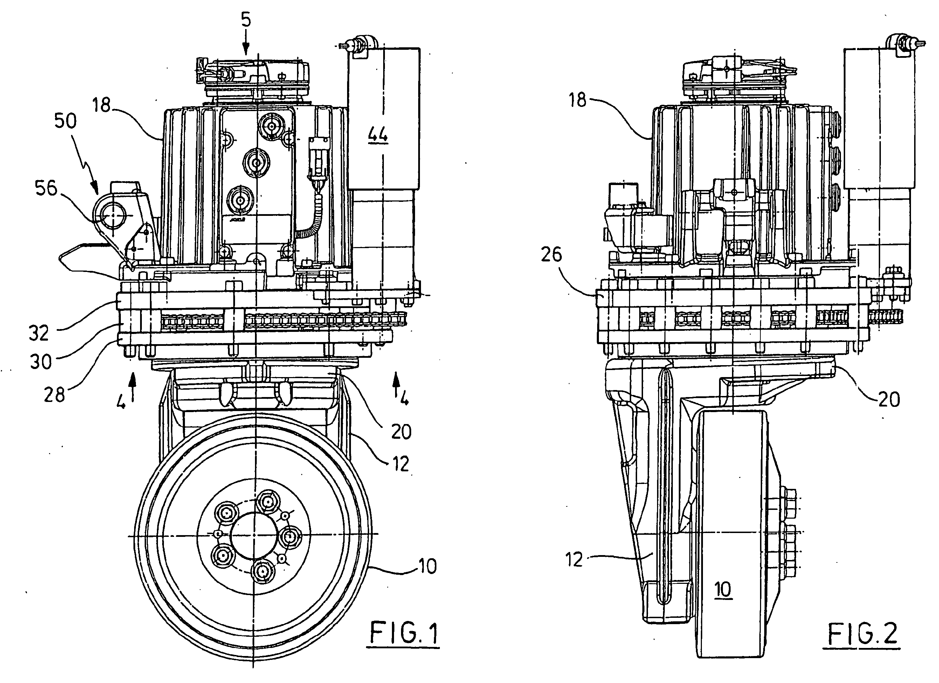

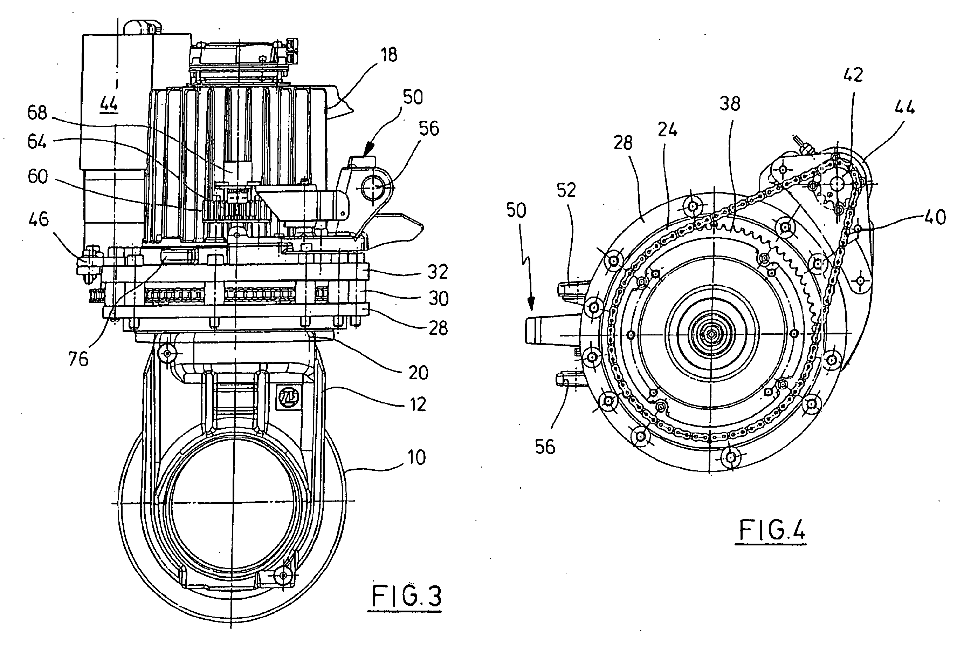

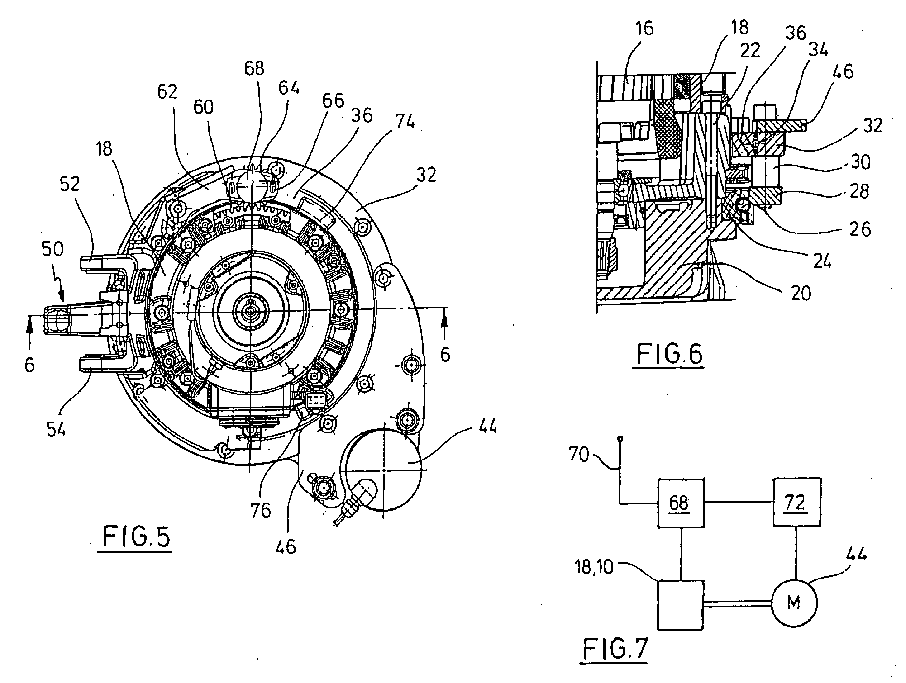

In den Fig. 1, 2 und 3 ist ein Antriebsrad 10 eines deichselgelenkten Flurförderzeugs gezeigt, das an einem Bein 12 einseitig gelagert ist. Im Bein 12 befindet sich ein Getriebe (nicht gezeigt), das mit der Abtriebswelle eines Motors 16 gekoppelt ist, von dem in den Fig. 1 bis 3 ein Gehäuse 18 dargestellt ist. Das Bein 12 ist an einer horizontalen Platte 20 angebracht, welche über Schraubbolzen 22 mit dem Gehäuse 18 verbunden ist (Fig. 6). Mit diesen Teilen ist ein innerer Lagerring 24 fest verbunden, der über ein Rollenlager 26 mit einem Außenring 28 zusammenwirkt, der im nicht gezeigten Rahmen des nicht gezeigten Flurförderzeugs fest angebracht ist. Auf diese Weise können Motorgehäuse 16 und Rad 10 um eine vertikale Achse schwenken, welche durch die Achse des Motors 18 geht und durch die Mitte des Rades 10. Der rahmenfeste Ring 28 ist über eine Reihe von Bolzen 30 mit einem oberen rahmenfesten Ring 32 verbunden, der mittels eines Rollenlagers 34 einen inneren Ring 24 hat. Wie in Fig. 4 zu erkennen, ist mit diesem ein Zahnkranz oder Zahnrad 38 drehfest verbunden, um das eine Kette 40 geschlungen ist. Die Kette ist auch um ein Ritzel 42 geschlungen, das an der Antriebswelle eines Lenkmotors 44 angebracht ist. Wird der Lenkmotor in Betrieb gesetzt, verschwenkt er das Antriebsrad 10 und den Motor 18 um eine vertikale Achse in der einen oder anderen Richtung je nach Drehrichtung des Lenkmotors 44. Der Lenkmotor 44 ist mittels einer Platte 46 an dem rahmenfesten Ring 32 angeflanscht.

Ein Lagerbauteil 50 weist zwei Schenkel 52, 54 auf (Fig. 5) mit jeweils einer Öffnung 56 für die Anlenkung einer nicht gezeigten Deichsel. Die Deichsel ist somit um eine horizontale Achse schwenkbar gelagert. Das Lagerbauteil 50 ist mit dem inneren Lagerring 36 verbunden. Somit ist die Deichsel um die vertikale Achse schwenkbar gelagert.

Am Umfang des Gehäuses 18 des Motors 16 ist ein Zahnsegment 60 angebracht, dessen Radius durch die vertikale Achse verläuft. Wie aus Fig. 5 zu erkennen, liegt das Zahnsegment 60 um einen Winkel von etwa 90° bezüglich des Lagerbauteils 50 versetzt. An dem Ring 36 ist ein Hebel 62 schwenkbar gelagert, in welchem ein Ritzel 64 drehbar gelagert ist, das mit dem Zahnsegment 60 kämmt. Eine nicht gezeigte Feder spannt das Ritzel 64 gegen das Zahnsegment 60 vor.

Das Ritzel 64 betätigt einen Sensor 68, insbesondere einen magnetischen berührungslosen Drehwinkelsensor, wie er weiter oben bereits beschrieben wurde. Wird die Deichsel und damit das Lagerbauteil 40 um die vertikale Achse der beschriebenen Vorrichtung mit Hilfe des Lagerringes 36 um einen bestimmten Winkel verschwenkt, wird dadurch über Zahnsegment 60 und Ritzel 64 der Drehwinkelsensor um einen bestimmten Winkelbetrag verstellt. In Fig. 7 ist die Deichsel bei 70 angedeutet und der Sensor bei 68. Der Sensor gibt sein Signal auf eine Regeleinrichtung 72. Die Regeleinrichtung 72 ist so ausgelegt, daß sie durch Ansteuerung des Lenkmotors 64 den gemessenen Winkel wieder zu Null machen will. Sie betätigt mithin über die beschriebene Triebverbindung die Einheit aus Motor und Antriebsrad 10 so lange, bis der Winkel Null erreicht worden ist. Die Messung des Regelungsvorgangs, d. h. der Rückstellung des Relativwinkels zwischen Deichsel 70 und Motoreinheit wird wiederum vom Sensor 68 festgestellt. Mit anderen Worten, der Sensor 68 gibt mit seinem Signal laufend den Sollwert vor, der durch Betätigung über den Lenkmotor 44 stets zu Null gemacht wird. Auf diese Weise wird eine elektrisch geregelte und betätigte Folgeregelung für die Lenkung des Rades 10 erhalten.

In Fig. 5 sind bei 74 und 76 Anschläge erkennbar, die mit dem Gehäuse 18 verbunden sind. Mit diesen Anschlägen wirken Teile des inneren Lagerrings 36 zusammen, um eine Notlenkung zu bewerkstelligen. Fällt die elektrische Versorgung aus, kann durch Zusammenwirken der Deichsel mit den Anschlägen 74, 76 die Antriebseinheit und damit das Rad 10 verschwenkt werden, wobei über einen Schleppwinkel zunächst ein Totweg zu überwinden ist.

## Patentansprüche

1. Antriebs- und Lenkvorrichtung für ein Flurförderzeug, mit einer Antriebseinheit, die einen Antriebsmotor (16), ein Getriebe und ein Antriebsrad (10) aufweist und die um eine vertikale Achse in einem fahrzeugfesten Rahmen des Flurförderzeugs gelagert ist, einem Lenkmotor (44) der die Antriebseinheit um die vertikale Achse verschwenkt, und einem Lenker, einem Winkelsensor (68) und einer LenkRegeleinrichtung (72) die über den Lenkmotor (44) nach Maßgabe des Signals des Winkelsensors (68) einen Lenkwinkel des Antriebsrades (10) einstellt, **dadurch gekennzeichnet, daß** der Lenker mittels eines Lagerbauteils (36) koaxial oder achsparallel zur Antriebseinheit drehbar gelagert ist, der Winkelsensor (68) am Lagerbauteil (36) angebracht ist und den relativen Winkel zwischen der Antriebseinheit und dem Lagerbauteil (36) mißt und die Lenkregeleinrichtung (72) über den Lenkmotor (44) die Antriebseinheit so verstellt, daß der relative Winkel Null wird.

2. Antriebs- und Lenkvorrichtung nach Anspruch 1, **dadurch gekennzeichnet, daß** ein ringförmiges Lagerbauteil (36) koaxial zur Antriebseinheit drehbar gelagert ist.

3. Antriebs- und Lenkvorrichtung nach Anspruch 1 oder 2, **dadurch gekennzeichnet, daß** das Lagerbauteil (36) in einem rahmenfesten Lagerring (32) drehbar gelagert ist.

4. Vorrichtung nach einem der Ansprüche 1 bis 3, **dadurch gekennzeichnet, daß** die Antriebseinheit ein Zahnsegment (60) und der Sensor (68) ein Ritzel (64) aufweist, das mit dem Zahnsegment (60) in Eingriff ist.

5. Vorrichtung nach Anspruch 4, **dadurch gekennzeichnet, daß** der Sensor (68) mit dem Ritzel (64) mittels einer Feder in Richtung Zahnsegment (60) vorgespannt ist.

6. Vorrichtung nach einem der Ansprüche 1 bis 5, **dadurch gekennzeichnet, daß** an der Antriebseinheit im Winkelabstand zu beiden Seiten der Nullstellung des Lenkers Anschläge (74, 76) vorgesehen sind, gegen die die Deichsel bzw. ihr Lagerbauteil anschlägt, wenn die Deichsel um den Winkelabstand gegenüber der Antriebseinheit verschwenkt wird.

7. Vorrichtung nach einem der Ansprüche 1 bis 6, **dadurch gekennzeichnet, daß** ein berührungsloser magnetischer Drehwinkelsensor vorgesehen ist, der getrennte Analogsignale für den Sinus- und Cosinus-Teil des gemessenen Winkels erzeugt.

8. Vorrichtung nach einem der Ansprüche 1 bis 7, **dadurch gekennzeichnet, daß** die Regeleinrichtung (72) eine Plausibilitätsstufe für das Ausgangssignal des Winkelsensors (68) aufweist.

## Claims

1. A drive and steering equipment for a floor conveyor, with a drive unit which has a driving motor (16), a gear and a driving wheel (10) and which is mounted in a bearing around a vertical axis in a vehicle-fixed frame of the floor conveyor, a steering motor (44) which pivots the drive unit around the vertical axis, and a control arm, an angle sensor (68) and a steering control equipment (72), which adjusts a steering angle of the driving wheel (10) through the steering motor (44) in accordance with the signal of the angle sensor (68), **characterised in that** the control arm is rotatably mounted in a bearing coaxially or axially parallel to the drive unit by means of a bearing component part (36), the angle sensor (68) is attached on the bearing component part (36) and measures the relative angle between the drive unit and the bearing component part (36) and the steering control equipment (72) adjusts the drive unit via the steering motor (44) such that the relative angle becomes zero.

2. A drive and steering equipment according to claim 1, **characterised in that** a circular bearing component part (36) is rotatably mounted coaxially to the drive unit.

3. A drive and steering equipment according to claim 1 or 2, **characterised in that** the bearing component part (36) is rotatably mounted in a frame-fixed bearing ring (32).

4. An equipment according to any one of claims 1 to 3, **characterised in that** the drive unit has a tooth segment (60) and the sensor (68) has a sprocket (64), which is in engagement with the tooth segment (60).

5. An equipment according to claim 4, **characterised in that** the sensor (68) with the sprocket (64) is pre-tensioned in the direction of the tooth segment (60) by means of a spring.

6. An equipment according to any one of claims 1 to 5, **characterised in that** stops (74, 76) are provided on the drive unit in angular distance to both sides of the zero position of the control arm, against which the drawbar or its bearing component part, respectively, knocks when the drawbar is pivoted about the angular distance with respect to the drive unit.

7. An equipment according to any one of claims 1 to 6, **characterised in that** a contactless magnetic rotational angle sensor is provided, which creates separate analogue signals for the sinus and the cosinus part of the measured angle.

8. An equipment according to any one of claims 1 to 7, **characterised in that** the control equipment (72) has a plausibility level for the output signal of the rotational angle sensor (68).

## Revendications

1. Dispositif d'entraînement et de direction pour un chariot de manutention, comportant une unité d'entraînement, qui comporte un moteur d'entraînement (16), une boîte de vitesses et une roue d'entraînement (10) et qui est montée autour d'un axe vertical dans un châssis solidaire du chariot de manutention, un moteur de direction (44), qui fait pivoter l'unité d'entraînement autour de l'axe vertical, et une bielle, un capteur d'angle (68) et un dispositif de réglage de direction (72) qui, par l'intermédiaire du moteur de direction (44), règle un angle de direction de la roue d'entraînement (10) en fonction du signal du capteur d'angle (68), **caractérisé en ce que** la bielle est montée rotative au moyen d'un palier (36), coaxialement ou parallèlement à l'axe de l'unité d'entraînement, le capteur d'angle (68) est monté sur le palier (36) et mesure l'angle relatif entre l'unité d'entraînement et le palier (36), et le dispositif de réglage de direction (72) règle l'unité d'entraînement par l'intermédiaire du moteur de direction (44), de telle sorte que l'angle rotatif devient égal à zéro.

2. Dispositif d'entraînement et de direction selon la revendication 1, **caractérisé en ce qu'**un palier (36) annulaire est monté rotatif coaxialement à l'unité d'entraînement.

3. Dispositif d'entraînement et de direction selon la revendication 1 ou 2, **caractérisé en ce que** le palier (36) est monté rotatif dans une bague de palier (32) solidaire du châssis.

4. Dispositif selon l'une quelconque des revendications 1 à 3, **caractérisé en ce que** l'unité d'entraînement comporte un segment denté (60), et le capteur (68) comporte un pignon (64) qui engrène avec le segment denté (60).

5. Dispositif selon la revendication 4, **caractérisé en ce que** le capteur (68) avec le pignon (64) est précontraint au moyen d'un ressort vers le segment denté (60).

6. Dispositif selon l'une quelconque des revendications 1 à 5, **caractérisé en ce que** des butées (74, 76) sont prévues sur l'unité d'entraînement à distance radiale des deux côtés de la position zéro de la bielle, contre lesquelles butées vient heurter le timon ou le palier de celui-ci lorsque le timon pivote sur une distance angulaire par rapport à l'unité d'entraînement.

7. Dispositif selon l'une quelconque des revendications 1 à 6, **caractérisé en ce qu'**il est prévu un capteur d'angle de rotation magnétique sans contact, qui génère des signaux analogiques séparés pour la partie en sinus et la partie en cosinus de l'angle mesuré.

8. Dispositif selon l'une quelconque des revendications 1 à 7, **caractérisé en ce que** le dispositif de réglage de direction (72) comporte un niveau de plausibilité pour le signal de sortie du capteur d'angle (68).
